**Europäisches Patentamt**

**European Patent Office**

**Office européen des brevets**

(19)

(11) Numéro de publication: **0 082 045**
**B1**

(12) **FASCICULE DE BREVET EUROPÉEN**

(45) Date de publication du fascicule du brevet:
13.08.86

(51) Int. Cl.⁴: **G 01 S 3/78**

(21) Numéro de dépôt: **82402185.1**

(22) Date de dépôt: **30.11.82**

(54) **Dispositif de localisation d'illuminateurs directifs, utilisable pour la détection panoramique de sources lasers.**

(30) Priorité: **11.12.81 FR 8123211**

(43) Date de publication de la demande:
**22.06.83 Bulletin 83/25**

(45) Mention de la délivrance du brevet:
**13.08.86 Bulletin 86/33**

(84) Etats contractants désignés:
**DE GB**

(56) Documents cité:
**EP-A-0 034 772**
**DE-A-2 931 818**
**DE-B-1 273 835**
**FR-A-2 454 628**
**GB-A-1 540 907**
**US-A-4 128 759**

(73) Titulaire: **THOMSON- CSF, 173, Boulevard Haussmann, F-75379 Paris Cedex 08 (FR)**

(72) Inventeur: **de Corlieu, Guy, THOMSON- CSF SCPI 173, bld Haussmann, F-75379 Paris Cedex 08 (FR)**
Inventeur: **Robin, Léon, THOMSON- CSF SCPI 173, bld Haussmann, F-75379 Paris Cedex 08 (FR)**
Inventeur: **Malard, Marcel, THOMSON- CSF SÇPI 173, bld Haussmann, F-75379 Paris Cedex 08 (FR)**

(74) Mandataire: **Trocellier, Roger, THOMSON- CSF SCPI 19, avenue de Messine, F-75008 Paris (FR)**

## Description

La présente invention concerne un dispositif de localisation d'illuminateurs directifs destiné, plus particuliérement, à la détection panoramique et à la localisation angulaire d'illuminateurs lasers.

Il est connu dans le domaine des radars et dans celui des lidars, de couvrir un champ total de réception en site, ou en gisement, par un diagramme du type multifaisceaux. Une pluralité de récepteurs peut être utilisée pour distinguer autant de voies de réception correspondant chacune à un secteur élémentaire du champ à observer.

Il est connu que le brevet DE-A-2 931 818 décrit un dispositif comportant une optique 12 placée devant une pluralité de photodétecteurs 10 transformant le signal lumineux reçu en un signal électrique.

Les photodétecteurs 10 sont reliés à un dispositif de traitement 18. Entre deux photodétecteurs 10 est disposé un dispositif 14 générant un retard. Le nombre de dispositifs 14 traversés pour atteindre une entrée dudit dispositif 18 dépend du photodétecteur 10 qui a capté le signal. De la différence de retard entre le signal électrique présent sur chaque entrée du dispositif 18 on déduit l'angle d'incidence du rayonnement.

D'autre part il est connu du brevet EP 0 034 772 d'utiliser quatre faisceaux de fibres optiques de longueurs différentes pour introduire les retards dans les signaux optiques provenant de l'éclairement d'une cible pour un faisceau laser. Les retards apportés permettent de mesurer successivement l'amplitude du signal provenant des quatre faisceaux de fibres optiques par un récepteur unique.

Un dispositif selon la présente invention utilise une couverture de type multifaisceaux de champ à surveiller et a pour but de constituer un système passif, discret, de réalisation simple et de haute efficacité.

Un objet de l'invention est de réaliser un dispositif de localisation en gisement de sources lasers, en faisant intervenir la durée de la transmission du rayonnement reçu dans des conducteurs en fibre optique utilisés ainsi comme éléments de retard, le dispositif comportant une pluralité de capteurs de rayonnement lumineux pour couvrir les différents secteurs élémentaires du champ, chaque capteur étant relié à un photodétecteur par l'intermédiaire de deux conducteurs à fibres de longueur différente et dont la différence de longueur est différente de celles présentées par les autres couples de conducteurs relatifs aux autres capteurs, en sorte d'identifier le capteur et la localisation angulaire par mesure au temps séparant les signaux détectés.

Les particularités de l'invention apparaîtront dans la description qui suit donnée à titre d'exemple non limitatif, à l'aide des figures annexées qui représentent:
- Fig. 1, un schéma d'un premier mode de réalisation d'un dispositif de localisation d'illuminateurs directifs conforme à l'invention;
- Fig. 2, un schéma destiné à illustrer le principe de fonctionnement;
- Fig. 3, un schéma d'un mode de réalisation des capteurs sous forme de coupleurs bidirectionnels;
- Fig. 4, une représentation linéaire du dispositif selon la Fig. 1 dans un exemple comportant huits capteurs;
- Fig. 5, le diagramme de temps des signaux correspondant au schéma de la Fig. 4;
- Fig. 6, un diagramme d'une réalisation des circuits électroniques de traitement utilisés dans un dispositif selon les Figs. 1 et 4;
- Fig. 7, un deuxième mode de réalisation d'un dispositif de localisation d'illuminateurs directifs conforme à l'invention;
- Fig. 8, le diagramme de temps des signaux correspondant à la réalisation préférée selon la Fig. 7;
- Fig. 9, un diagramme d'une réalisation des circuits électroniques de traitement utilisés dans un dispositif selon la Fig. 7.

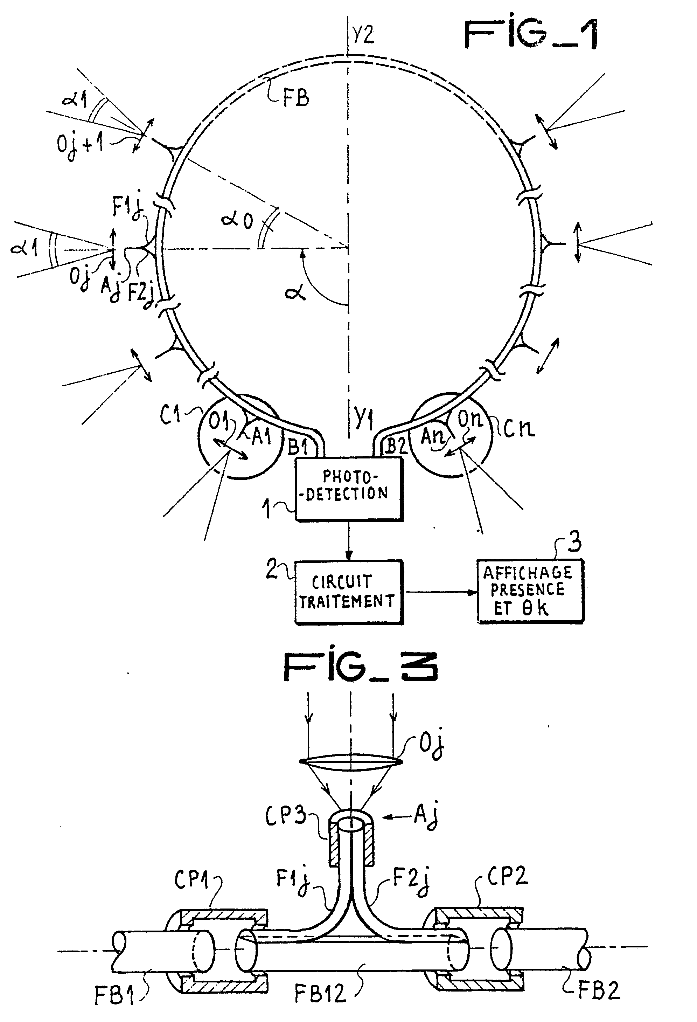

Le procédé mis en oeuvre est plus apparent sur le mode de réalisation de la Fig. 1 qui, de ce fait, est décrit en premier quoique n'étant pas le mode préféré. En se reportant à cette figure, le dispositif de localisation comporte une pluralité n de capteurs C1 à Cn répartis circulairement pour exercer une couverture panoramique en gisement. Une répartion plus limitée peut être utilisée pour couvrir un secteur plus faible, ce serait le cas en site notamment. Pour l'exemple considéré, les capteurs sont disposés angulairement de manière réguliere à $\alpha_o = \alpha_s/n$ l'un du suivant, $\alpha_s$ étant la couverture angulaire totale dans le plan de référence considéré; le champ élémentaire $\alpha_l$ de chaque capteur est choisi de préférence légèrement supérieur à $\alpha_o$ pour que les secteurs élémentaires se chevauchent partiellement et éviter des angles morts. L'ensemble représente ainsi une distribution régulière du type multifaisceaux.

Chaque capteur Cj compte une optique réceptrice Oj pour focaliser le rayonnement incident reçu dans le champ élémentaire correspondant. L'optique est dotée de moyens de filtrage (traitements ou filtres) pour limiter, de manière connue, la réception lumineuse à la bande spectrale d'exploration désirée. Le rayonnement focalisé est destiné à un dispositif détecteur 1 qui peut être réalisé à partir de diodes photoréceptrices en circuit solide. Une particularité du capteur est que ce rayonnement est transmis au détecteur par deux chemins optiques d'inégale longueur réalisés au moyen de deux conducteurs à fibres optiques F1j et F2j. Les deux conducteurs sont regroupés par une de leurs extrémités Aj pour recevoir le rayonnement focalisé par l'optique Oj, et leur autre extrémité, B1 et B2 respectivement, est couplée au dispositif détecteur.

Suivant la représentation simplifiée Fig. 2, on désigne par X1 et X2 les longueurs des chemins optiques respectits AB1 et AB2 entre un capteur considédé en A et les extrémités B1 et B2. Les conducteurs F1 et F2 sont utilisés comme des lignes à retard, de retard différent puisque de longueurs inégales.

En supposant une impulsion laser reçue en A à l'instant $t_0$, le temps mis pour aller vers le détecteur 1 est T1 =

$$\frac{X1}{c}$$

par le chemin AB1 et, T2 =

$$\frac{X2}{c}$$

par le chemin AB2, c étant la vitesse de la lumière. L'instant $t_0$ est inconnu mais, dans une réalisation selon la Fig. 1, les deux parcours vérifient la relation X1 + X2 = L longueur totale donnée, la même pour tous les capteurs, quelque soit j. En désignant en outre par $\Delta$T; T2 - T1 =

$$\frac{X2-X1}{c}$$

le temps correspondant à la différence de parcours, on peut déduire par mesure de ce temps X1 ou X2 en fonction des paramètres $\Delta$T et L, et donc déterminer le capteur récepteur et la direction de localisation angulaire $\alpha$ correspondantée par rapport à une référence Y1 Y2 de mesure liée au dispositif. Ceci implique que deux autres conditions sont satifaites pour le fonctionnement. La première est que les différences de parcours $\Delta X_j$ = [X2 - X1j] doivent être différentes et donc présenter n valeurs distinctes. La seconde condition est que la plus petite des valeurs $\Delta X_j$ doit correspondre à un temps de pacours qui reste supérieur à la durée maximale $\tau_M$ de l'impulsion laser attendue; en appelant $\Delta L_m$ la valeur minimale de $\Delta X$, la relation: $\Delta L_m > c.\tau_M$ doit donc être verifiée, c etant la vitesse de la propagation lumineuse.

De ce qui précède, il résulte que l'abscisse du point A d'injection est connu en fonction du paramètre L constant donné par construction et de la durée $\Delta$T mesurée, par exemple en évaluant X2 = (c.$\Delta$T + L)/2 des relations précitées. Comme les valeurs X2 sont distinctes d'un capteur à un autre, celle évaluée caractérise bien l'ordre k du capteur correspondant et donc la direction $\alpha_k$ de réception du rayonnement détecté.

Les moyens mis en oeuvre après l'étage de photodétection 1 sont symbolisés sur la Fig. 1 par un ensemble de traitement 2 et un dispositif d'affichage 3 de la présence d'un signal attendu détecté et de sa direction k.

Le dispositif selon la Fig. 1 peut être réalisé de diverses manières pour former un ensemble de n capteurs répartis, de préférence régulièrement, sur un chemin optique de longueur L terminé par les extrémités B1 et B2. Une réalisation avec deux conducteurs distincts par capteur entre les extrémités Al à An de réception, respectivement, et celles B1 et B2 de détection, s'avère délicate pour remplir les conditions respectives de longueurs avec une bonne précision. Ce problème est résolu en utilisant une liaison FB par fibre optique formant une ligne bus de longueur L entre les extrémités B1 et B2, chaque capteur étant inséré sur cette ligne et constitué par un montage coupleur optique bidirectionnel pour injecter le flux lumineux focalisé par l'optique réceptrice Oj correspondante dans la ligne FB, et en répartissant ce flux de manière égale respectivement vers B1 et vers B2.

Le coupleur bidirectionnel peut être conçu à l'aide de dérivateurs-mélangeurs du type décrit dans la demande de brevet français n° 76/08389 du 23 mars 1976 publiée sous le n° 2 362 413.

La Fig. 3 représente un schéma correspondant. La ligne bus FB est avantageusement réalisée en conducteur optique monofibre pour réduire les pertes. Le coupleur est interposé sur cette ligne et est formé d'un élément de ligne principal FB12 de forte section pour assurer la continuité optique de la liaison FB entre les extrémités FB1 et FB2 du bus optique, et des deux éléments F1j et F2j allant du bus vers l'extrémité AJ au foyer de l'optique réceptrice Oj. Les éléments F1j et F2j sont façonnés en sorte de présenter une section réduite coté extrémité du bus pour réduire les pertes d'insertion des coupleurs, et de manière à se touver accolées à la fibre FB12; les deux fibres accolées FB12 et F1j ou FB12 et F2j présentent une forme et une section totale correspondant à la section terminale de la ligne bus en FB1 et FB2; elles peuvent être accolées selon une corde. De même, le façonnage coté extrémité réceptrice Aj est réalisé pour accoler et regrouper les deux fibres semblables F1j et F2j dans le plan focal. Les techniques de façonnage d'extrémité de fibre sont indiquées dans le brevet précité. Par souci de simplification, les gaines entourant le coeur des différentes fibres FB1, FB2, FB12, F1j et F2j n'ont pas été figurées. Les éléments CP1 et CP2 symbolisent des montages mécaniques assurant le couplage optique des extrémités de fibres en regard; l'élément CP3 est une pièce d'assemblage des extrémités des deux fibres F1j et F2j. Il est entendu que le mode de réalisation de la Fig. 3 est donné à titre d'exemple non limitatif et que les coupleurs Cl à Cn peuvent être exécutés selon d'autres techniques connues rélatives à des coupleurs en T assymétriques.

Il y a lieu de remarquer que les angles de vue $\alpha_1$ des optiques étant pris légèrement supérieur à la séparation angulaire $\alpha_o$ des axes optiques, une même impulsion lumineuse pourra être injectée dans la fibre FB formant barre bus en deux points plus proches voisins Aj et Aj + 1. On pourra d'autre part réaliser une logique déclenchant et arrêtant le comptage aboutissant à la mesure de $\Delta$T pour

traiter deux groupes de deux impulsions. Il s'en suit que la direction d'illumination pourra être estimée à un demi-quantum près soit $\alpha_o/2$.

L'étage photodétecteur 1 peut comporter une diode photoréceptrice à chaque extrémité B1 et B2 ou bien, les extrémités B1 et B2 de la fibre FB peuvent être regroupées et traitées au moyen d'une seule photodiode.

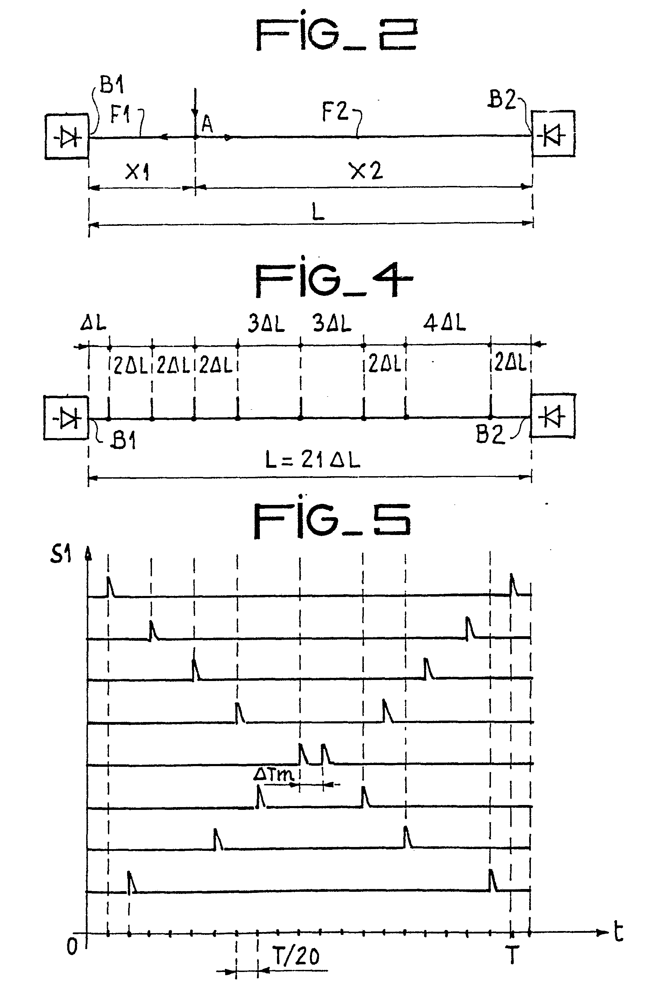

La Fig. 4 représente schématiquement une configuration possible à huit capteurs disposés à 45° les uns des autres. La representation est linéaire comme dans le cas de la Fig. 2 pour montrer les espacements entre les points successifs correspondant aux capteurs. Les valeurs indiquées satisfont aux conditions qui ont été énoncées précédemment. L'espacement le plus faible $\Delta L$ considéré est au moins égal à $\Delta L_m$. Cette valeur minimale $\Delta L$ satisfait en plus au temps nécessaire pour séparer deux impulsions entre elles, temps qui doit être choisi supérieur à la durée d'impulsion laser maximale $\tau_M$ prévisible et que l'on peut raisonnablement choisir égal à 1,2 $\tau_M$. Comme on peut s'en rendre compte, les longueurs de fibre séparant les capteurs successifs présentent plusieurs valeurs différentes allant de $\Delta L$ à $4\Delta L$; pour cette raison, les liaisons correspondantes sur le schéma de la Fig. 1 ont été représentées avec des interruptions.

Le diagramme de temps correspondant séparant les deux impulsions détectées en B1 et B2 est donné sur la Fig. 5. L'incrément de temps minimal $\Delta T_m$ qui sépare deux impulsions est égal à l'incrément de longueur $\Delta L$ du dispositif.

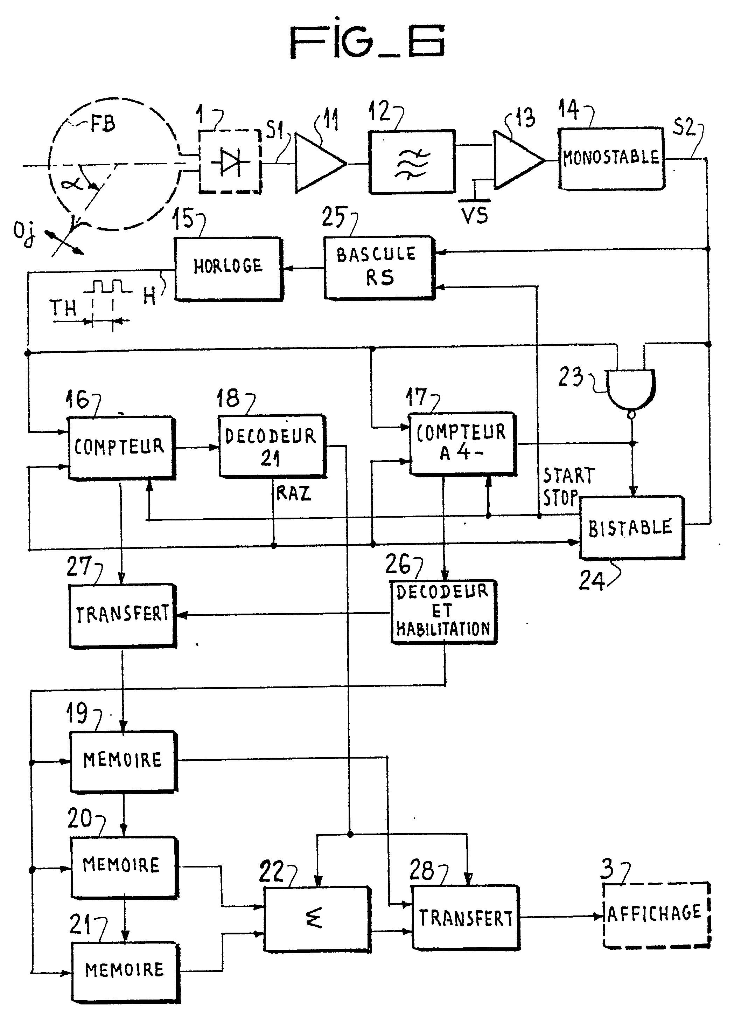

La Fig. 6 représente un exemple de réalisation de l'ensemble de traitement des signaux détectés. Ces signaux S1, issus de l'étage de photodétection 1, sont préamplifiés dans un circuit 11, filtrés dans un filtre passe-bas 12 et mis en forme dans un ensemble formé d'un comparateur à seuil 13 suivi d'un circuit monostable 14. La durée monostable 14 est choisie inférieure à celle maximale $\tau$ de l'impulsion laser, par exemple égale à $\tau_M/2$. Les signaux S2 ainsi mis en forme sont ensuite traités dans un ensemble de circuits comportant principalement une horloge de synchronisation 15, deux compteurs 16 et 17, un décodeur 18, trois mémoires 19, 20 et 21 connectées en cascade selon un montage en pile, et en sommateur 22.

L'horloge 15 fournit des impulsions de duré TH/2 à la période TH, la durée TH/2 étant choisie voisine mais supérieure à la valeur $\tau_M$. Dans le concept d'une réalisation selon la Fig. 4, le compteur 16 est prévu pour pouvoir compter au moins vingt et une impulsions d'horloge. Le compteur 17 est un compteur à quatre destiné à compter les deux ou quatre impulsions S2 attendues; pour éviter l'accès à compteur d'impulsions parasites qui serait décalées d'une impulsion laser reçue d'un temps inférieur à la valeur $\Delta Tm$ correspondant à $\Delta L$, les signaux S2 sont transmis au compteur 17 à travers une porte d'échantillonnage 23 constituée par un circuit ET-NON qui reçoit, par sa deuxième entrée, le signal d'horloge H. Lorsque l'état 21 est atteint par le compteur 16, le décodeur 18 commande la remise à zéro des deux compteurs 16 et 17 ainsi que d'un circuit 24 et il commande également le sommateur 22. Le circuit 24 peut consister en une bascule bistable pour commander le démarrage et l'arrêt des compteurs 16 et 17 ainsi que de l'horloge 15, celle-ci à travers une bascule RS 25; le démarrage est produit lors de la réception de la première impulsion S2 à travers la porte 23; l'arrêt résulte du rebasculement par la remise à zéro provenant de 18. Le compteur 17 commande lors de la réception de la deuxième impulsion laser, à travers un circuit de décodage et d'habilitation 26 et un circuit de transfert 27, le transfert du contenu du compteur 16 dans la mémoire 19. Ce contenu correspond à l'intervalle de temps $\Delta$ à mesurer dans le cas où un seul capteur est activé par une émission laser. Dans le cas où deux capteurs voisins sont illuminés, la troisième et la quatrième impulsion S2 commandent, à travers les circuits 17, 26 et 27, deux autres transferts successifs de l'état de comptage du compteur 16 en sorte que finalement le premier état se retrouve dans la mémoire terminale 21, le second dans la mémoire intermédiaire 20 et le dernier dans la première mémoire 19. Le contenu de la mémoire 21 est soustrait de celui de la mémoire 20 dans le sommateur 22. Le résultat de la soustraction et le contenu de la mémoire 19 sont transférés à l'unité d'affichage 3 à travers un circuit de transfert 28.

Ce circuit de traitement permet de prendre en compte les signaux issus de deux capteurs adjacents et donc, d'interpoler un gisement à un demi-quantum près. Dans le cas où deux capteurs voisins sont activés, la première impulsion S2 reçue déclenche la mise en route de l'horloge 24, des compteurs 16 et 17 et la mise à zéro des mémoires 19 et 21 (à travers le décodeur 26). Les deuxième, troisième et quatrième impulsions suivantes déclenchent les transferts successifs de l'état du compteur 16 vers les mémoires 19 à 21 comme il a été indiqué. Le résultat de la soustraction en 22 est transféré ainsi que le contenu de la mémoire 19 vers l'affichage 3, et la remise à zéro des compteurs 16 et 17 et l'arrêt de ces circuits et de l'horloge 15 est effectué juqu'au cycle de mesure suivant.

Dans le cas où un seul capteur est activé, la première impulsion S2 détectée déclenche de même la mise en route de l'horloge 24, des compteurs 16 et 17 et la remise à zéro des mémoires 19 à 21. La seconde impulsion déclenche le transfert de l'état du compteur 16 dans la mémoire 19. Le compteur 16 poursuit le comptage jusqu'à la valeur 21, ce dernier état provoquant le transfert du contenu de 19 vers l'affichage 3, le transfert des mémoires 20 et 21 vers le sommateur 22 dont le résultat est à l'évidence zéro et l'affichage en 3, la remise à zéro des compteurs 16 et 17 et l'arrêt des circuits 15, 16 et 17.

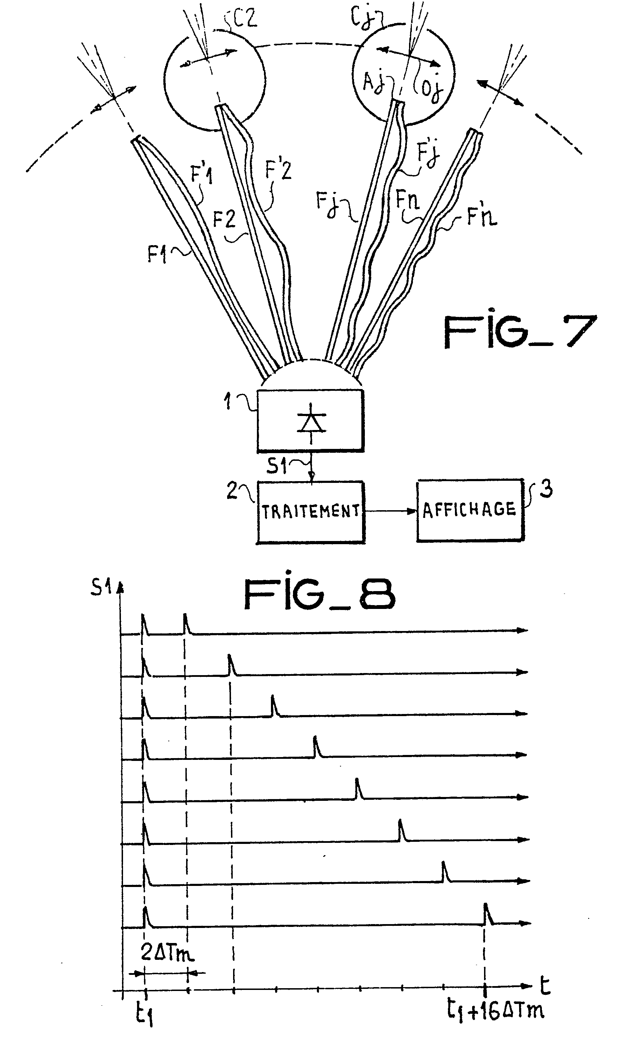

La Fig. 7 représente un deuxième mode de réalisation, préféré, d'un dispositif de location conforme à l'invention.

La solution décrite à l'aide de la Fig. 1 s'apparente à une barre bus optique couplant n capteurs optiques abonnés à un récepteur central à travers une fibre unique. Ce genre de montage présente un certain nombre d'inconvénients dont le principal résulte de réflexions parasites aux extrémités de la fibre. Les remèdes sont connus et efficaces mais peuvent entraîner une majoration notable du coût de l'appareil. Une réalisation conforme à la Fig. 7 permet de remédier à ces inconvénients sans accroîssement notable du coût; elle utilise de même la fonction ligne en retard des fibres optiques pour obtenir l'apressage de chaque capteur. Dans cette version, chaque capteur optiqlie est lié séparément à l'étage detecteur 1 par deux conducteurs à fibre de longueur différente. Les liaisons Fj, Fj' sont de préférence réalisées en monofibre pour réduire les pertes optiques.

Il y a lieu, comme précédemment, de respecter les conditions que les différences de longueur entre les deux trajets sont toutes différentes, la plus petite différence de trajet entre ces longueurs devant rester supérieure à la valeur $\Delta L_m$ elle même étant supérieure ou au moins égale à $c.\tau_M$ où $\tau_M$ est la durée d'impulsion laser maximale. En outre, si l'on appelle F1-F1',...Fn-Fn' les fibres respectives des différents capteurs, toutes les fibres F1, F2...Fj...Fn, ont la même longueur. La paire d'ordre j joignant l'optique Oj à la photodiode 1 sera telle que, la longueur de Fj diminuée de la longueur F'j est egale à $j.(m.\Delta L)$ avec m entier et au moins égal à l'unité, par exemple, $m = 2$. De cette façon, la réponse de chacun des capteurs à une impulsion lumineuse tombant dans son champ de réception, est connituée de deux impulsions électriques. La Fig. 8 donne, à titre d'exemple, le diagramme des temps correspondant à un système de huit capteurs répartis régulièrement. Dans ces conditions, lorsqu'une impulsion lumineuse est reçue par deux capteurs adjacents, elle donne naissance, en sortie du détecteur 1 à un groupe de trois impulsions. On peut alors faire effectuer le traitement par un compteur de la façon suivante: la première impulsion reçue fait démarrer le comptage, la seconde provoque le transfert de l'état instantané du compteur vers une première mémoire, la troisième provoque l'arrêt du comptage, le transfert de l'état du compteur au moment de l'arrêt vers une seconde mémoire, enfin le contenu des deux mémoires est transféré à un affichage et le compteur remis à zéro. De cette façon on peut interpoler la direction du laser et obtenir un quantum de résolution égal à la moité de l'angle $\alpha_o$ que font les axes de capteurs optiques plus proches voisins.

Reprenant l'exemple du système à huit capteurs optiques et du diagramme des temps de la Fig. 8, la différence maximale de longueur atteinte pour la huitième paire est donnée par $\Delta L_M = 16.\Delta L_m$.

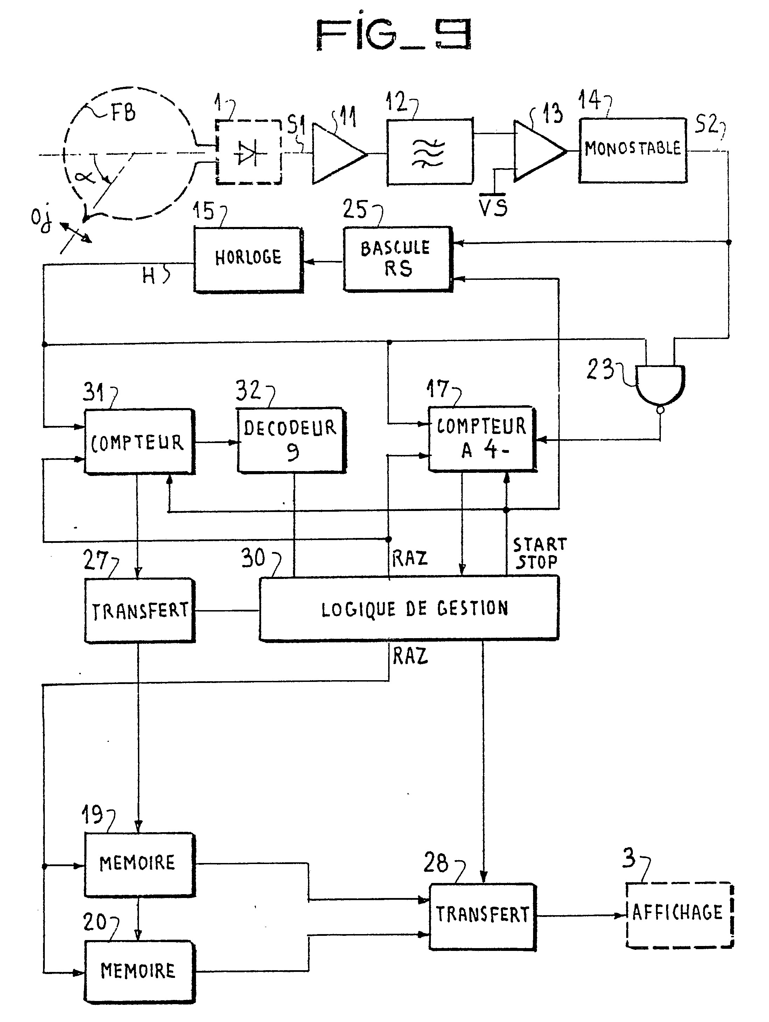

La Fig. 9 représente une réalisation des circuits de traitement 2 dans une version à huit capteurs du dispositif selon les Figs. 7 et 8. Cette realisation reprend un certain nombre d'éléments du schéma précédent Fig. 6. Le nombre maximal d'impulsions à compter est de trois, compte-tenu que les deux premières impulsions sont détectées simultanément, provenant de deux capteurs voisins. Le nombre maximal de période TH à compter est égal à huit pour un circuit d'horloge de période considérée par exemple égale à $2\Delta T_m$. En conséquence, le circuit comportera un compteur à 9 référencé 31 et un décodeur à 9 référencé 32. Sur réception de l'état 1 du compteur 17 correspondant à la détection d'une première impulsion à l'instant $t_1$, un circuit logique de gestion 30 commande le démarrage de l'horloge 15 via la bascule 25, et des compteurs 17 et 31. Lorsque le compteur 17 passe à l'état 2 suite à réception d'une deuxième impulsion, sa sortie déclenche, via la logique 30, le transfert en mémoire 19 du contenu du compteur 31, ce contenu permettant d'identifier directement le capteur et l'angle $\alpha$ correspondant. Si le compteur 17 passe ensuite à l'état 3 (cas de deux capteurs voisins illuminés au cours d'un cycle de durée 8TH), la sortie de celui-ci, via le circuit logique 30, va commander un nouveau transfert de l'état du compteur 31 en 19, le contenu de 19 étant transvasé dans la mémoire 20. En fin de cycle, lorsque le compteur 31 atteint la valeur prevue par le décodage, la sortie du décodeur 32 change d'état et déclenche via le circuit logique 30, l'arrêt du circuit horloge 15 et des compteurs 17 et 31, le transfert du contenu des mémoires 19 et 20 vers l'affichage en 3, puis la remise à zéro des compteurs 17 et 31 et des mémoires 19 et 20. Le circuit 30 peut être réalisé aisément à l'aide de circuits porte et décodeur d'état.

Utilisé pour la détection panoramique de sources lasers, le dispositif comporte les capteurs disposés régulièrement à $\alpha_o = 2\pi/n$ l'un du suivant, en sorte de couvrir le champ complet en gisement. En outre, l'angle de vue $\alpha_1$ des capteurs est, de préférence, choisi légèrement supérieur à cette valeurt $\alpha_o$, le traitement étant conçu par une mesure à $\alpha_o/2$ près de la localisation des sources lasers comme il a été décrit.

## Revendications

1. Dispositif de localisation d'illuminateurs directifs, utilisant plusieurs capteurs de radiations lumineuses pour couvrir un champ d'observation déterminé selon des champs élémentaires successifs, les capteurs (CI à Cn) comportant des moyens de réception optique (Oj) pour focaliser le rayonnement et le filtrer dans la bande exploitée, des moyens de photodétection (1) étant prévus pour détecter le rayonnement focalisé, le dispositif étant caractérisé en ce que chaque capteur (Cj) comporte des moyens de focalisation et d'injection de lumière dans une fibre optique et deux conducteurs à fibres optiques (F1, F2) regroupés par une extrémité pour recevoir le rayonnement focalisé par une optique réceptrice (Oj) et le transmettre par leur autre extrémité couplée aux moyens de détection (1), les deux conducteurs n'étant pas de même longueur en sorte de produire des signaux détectés décalés et la différence de longueur présentée étant distincte pour chaque capteur en sorte que le décalage temporel (ΔT) des signaux identifie le capteur, les moyens de détection alimentant un circuit de traitement (2) procédant par comptage pour indentfier le dit décalage temporel et consécutivement le champ élémentaire correspondant.

2. Dispositif de localisation selon la revendication 1, caractérisé en ce que chaque coupleur (Cj) est relié séparément par deux conducteurs de longueur différente (Fj, F'j) aux moyens de détection et qu'un premier de ces conducteurs (F1, F2,...Fj..., Fn) a la même longueur pour chaque capteur tandis que le deuxième conducteur (F'1, F'2,...F'j..., F'n) a une longueur différente pour chaque capteur.

3. Dispositif de localisation selon la revendication 2, caractérisé en ce que les conducteurs optiques (F1,... Fn; F'1... F'n) sont réalisés en monofibre et la différence de longueur entre le premier et le deuxième conducteur est égale à j. mΔL, j correspondant au rang du capteur, les capteurs étant répartis angulairement, m étant un coéfficient multiplicateur entier au moins égal à 1, et ΔL représentant un increment de longueur prédéterminée choisi supérieur à C $\tau_M$ où C est la vitesse de la lumière et $\tau_M$ la durée maximale prévue d'impulsion laser.

4. Dispositif de localisation selon la revendication 1, caractérisé en ce qu'il utilise une liaison par fibre optique formant une ligne bus (FB) entre les dites deux extrémités, les capteurs étant répartis angulairement et comportant chacun un dispositif coupleur optique bidirectionnel à la ligne bus optique.

5. Dispositif de localisation selon la revendication 4, caractérisé en ce que la somme des longueurs des deux conducteurs (F1, F2) reliant chaque capteur aux dites extrémités de détection (B1, B2) correspond à la longueur (L) de la ligne bus optique (FB).

6. Dispositif de localisation selon la revendication 5, caractérisé en ce que les capteurs (Cl à Cn) sont interposés sur la ligne bus (FB) en sorte que la différence de parcours (ΔXj) des deux trajets optiques à partir de chaque capteur sont différentes et que la différence la plus faible (ΔLm) est prédéterminée supérieure à c $\tau_M$ où c est la vitesse de la lumière et $\tau_M$ la durée maximale prévue d'impulsion laser.

7. Dispositif de localisation selon la revendication 6, caractérisé en ce que la ligne bus optique (FB) est monofibre et les coupleurs bidirectionnels composés chacun d'un élément de fibre principal (FB12) interposé sur la ligne bus et de deux éléments de fibre (F1j, F2j) pour coupler l'optique réceptrice (Oj) du capteur à la ligne bus, et à travers celle-ci, aux extrémités aboutissant aux moyens de détection.

8. Dispositif de localisation selon l'une quelconque des revendications précitées, utilisé pour exercer une couverture angulaire d'angle $\alpha_s$ en gisement, caractérisé en ce que les capteurs en nombre n sont répartis régulièrement en gisement formant un angle $\alpha_o = \alpha_s/n$ d'un capteur au suivant et que les angles de vue des optiques réceptrices présentent une même valeur $\alpha_1$, déterminée légèrement supérieure à la valeur $\alpha_o$ de séparation des capteurs pour permettre un chevauchement d'un capteur au suivant.

9. Dispositif de localisation selon la revendication 8, caractérisé en ce que le circuit de traitement (2) est déterminé pour obtenir la localisation angulaire à un demi-quantum près, le quantum de mesure représentant la valeur angulaire $\alpha_o$ séparant deux capteurs successifs.

10. Utilisation d'un dispositif de localisation selon la revendication 8 ou 9, pour exercer une couverture panoramique en gisement, dans lequel les n capteurs sont répartis régulièrement en gisement formant un angle $\alpha_o = 2\pi/n$ d'un capteur au suivant. *Ty

**Patentansprüche**

1. Vorrichtung zur Lokalisierung von direktiven Beleuchtungsquellen, unter Verwendung von mehreren Lichtstrahlungsaufnehmern zur Überdeckung eines Beobachtungsfeldes, welches durch aufeinanderfolgende elementare Felder bestimmt ist, wobei die Aufnehmer (Cl bis Cn) optische Empfangsmittel (Oj) zum Fokussieren der Strahlung und zum Filtern desselben innerhalb des ausgewerteten Bandes enthalten, wobei ferner photodetektionsmittel (1) vorgesehen sind, um die fokussierte Strahlung zu erfassen, und wobei die Vorrichtung dadurch gekennzeichnet ist, daß jeder Aufnehmer (Cj) Mittel zum Fokussieren und zum Einführen des Lichtes in eine Lichtleitfaser sowie zwei Faseroptik-Leiter (F1, F2) enthält, die an einem ersten Ende zusammengefaßt sind, um die Strahlung zu empfangen, welche durch eine Empfangsoptik (Oj) fokussiert wurde, und sie über das andere, an die Detektionsmittel (1) angekoppelte Ende zu übertragen, wobei die zwei Leiter von ungleicher Länge sind, so daß gegeneinander versetzte Detektionssignale erzeugt werden und der jeweilige Längenunterschied für jeden Aufnehmer verschieden ist, so daß die Zeitverschiebung (ΔT) der Signale den Aufnehmer identifiziert, wobei die Detektionsmittel eine Verarbeitungsschaltung (2) speisen, welche mit Zählung arbeitet, um die genannte Zeitverschiebung und anschließend das entsprechende elementare Feld zu identifizieren.

2. Lokalisiervorrichtung nach Anspruch 1, dadurch gekennzeichnet, daß jeder Koppler (Cj) getrennt über zwei Leiter unterschiedlicher Länge (Fj, F'j) an die Detektionsmittel angeschlossen ist und daß ein erster dieser Leiter (F1, F2,... Fj..., Fn) dieselbe Länge für jeden Aufnehmer aufweist, während der zweite Leiter (F'1, F'2,... F'j..., F'n) eine für jeden Aufnehmer unterschiedliche Länge aufweist.

3. Lokalisiervorrichtung nach Anspruch 2, dadurch gekennzeichnet, daß die optischen Leiter (F1,... Fn; F'1... F'n) als Monofaser ausgebildet sind und die Längendifferenz zwischen dem ersten und dem zweiten Leiter gleich j. m$\Delta$L ist, worin j der Ordnungszahl des Aufnehmers entspricht, wobei die Aufnehmer winkelmäßig verteilt sind, worin m ein ganzzahliger Multiplikationskoeffizient ist, welcher wenigstens gleich 1 ist, und worin $\Delta$L ein vorbestimmtes Längeninkrement darstellt, welches größer als c $\tau_M$ gewählt ist, worin c die Lichtgeschwindigkeit und $\tau_M$ die maximale vorgesehene Laserimpulsdauer ist.

4. Lokalisiervorrichtung nach Anspruch 1, dadurch gekennzeichnet, daß eine Faseroptik-Verbindung verwendet wird, welche eine Busleitung (FB) zwischen den genannten beiden Enden bildet, wobei die Aufnehmer winkelmäßig verteilt sind und jeweils eine optische Koppelvorrichtung zur bidirektionalen Kopplung mit der optischen Busleitung enthalten.

5. Lokalisiervorrichtung nach Anspruch 4 dadurch gekennzeichnet, daß die Summe der Längen der zwei Leiter (F1, F2), welche jeden Aufnehmer mit den genannten Detektionsenden (B1, B2) verbinden, der Länge (L) der optischen Busleitung (FB) entspricht.

6. Lokalisiervorrichtung nach Anspruch 5, dadurch gekennzeichnet, daß die Aufnehmer (Cl bis Cn) in die Busleitung (FB) derart eingefügt sind, daß der Laufstreckenunterschied ($\Delta$Xj) der beiden optischen Wege ab jedem Aufnehmer verschieden sind und daß die kleinste Differenz ($\Delta$Lm) vorbestimmt und größer als c $\tau_M$ ist, worin c die Lichtgeschwindigkeit und $\tau_M$ die maximale vorgesehene Laserimpulsdauer ist.

7. Lokalisiervorrichtung nach Anspruch 6, dadurch gekennzeichnet, daß die optische Busleitung (FB) eine Monofaser ist und die bidirektionalen Koppler jeweils zusammengesetzt sind aus einem Hauptfaserelement (FB12), welches in die Busleitung eingefügt ist, und aus zwei Faserelementen (F1j, F2j) zum Ankoppeln der Empfangsoptik (Oj) des Aufnehmers an die Busleitung und über diese an die Enden, welche an den Detektionsmitteln ankommen.

8. Lokalisiervorrichtung nach einem der vorstehenden Ansprüche, verwendet zur Durchführung einer Überdeckung des Seitenwinkels $\alpha_s$ dadurch gekennzeichnet, daß die Aufnehmer, deren Anzahl gleich n ist, regelmäßig über den Seitenwinkel verteilt sind und einen Winkel $\alpha_o = \alpha_s/n$ von einem Aufnehmer zum nächsten bilden und daß die Erfassungswinkel der Empfangsoptiken denselben Wert $\alpha_1$ aufweisen, der etwas größer als der Wert $\alpha_o$ zwischen den Aufnehmern ist, um eine Überlappung von einem Aufnehmer zum nächsten zu gestatten.

9. Lokalisiervorrichtung nach Anspruch 8, dadurch gekennzeichnet, daß die Verarbeitungsschaltung (2) so ausgelegt ist, daß die Winkellokalisierung bis auf ein Halbquantum erhalten wird, wobei das Meßquantum den Winkelwert $\alpha_o$ darstellt, welcher zwei aufeinanderfolgende Aufnehmer trennt.

10. Verwendung einer Lokalisiervorrichtung nach Anspruch 8 oder 9 zur Durchführung einer Seitenwinkel-Panoramaüberdeckung, wobei die n Aufnehmer regelmäßig über den Seitenwinkel verteilt sind und einen Winkel $\alpha_o = 2\pi/n$ von einem Aufnehmer zum nächsten bilden.

**Claims**

1. Locating device for directive illuminators, using a plurality of luminous radiation probes to cover a field of observatton determined by successive elementary fields, the probes (Cl to Cn) comprising optical reception means (Oj) to focus the radiation and to filter it within the exploited band, photodetection means (1) being provided to detect the focussed radiation, the device being characterized in that each probe (Cj) comprises means for the focussing and injection of light into an optical fiber and two optical fiber conductors (F1, F2) joined at one end to receive the radiation focussed by a reception optic (Oj) and to transmit it through their other ends coupled to the detection means (1), the two conductors having different lengths to produce shifted detected signals, and the length difference being different for each probe so that the time shift ($\alpha$T) of the signals identifies the probe, the detection means feeding a processing circuit (2) proceeding by counting to identify said time shift and subsequently the corresponding elementary field.

2. Locating device according to claim 1, characterized in that each coupler (Cj) is separately connected by two conductors of different lengths (Fj, F'j) to the detection means and that a first one of these conductors (F1, F2.., Fj. .., Fn) has the same length for each probe whereas the second conductor (F'1, F'2..., F'j..., F'n) has a different length for each probe.

3. Locating device according to claim 2, characterized in that the optical conductors (F1,...Fn; F'1...F'n) are embodied as monofibers and the length difference between the first and second conductors equals j. m$\Delta$L, j corresponding to the order of the probe, the probes being angularly distributed, m being an integral multiplication coefficient which is at least equal to 1, and $\Delta$L representing a predetermined length increment selected to exceed c $\tau_M$ wherein c is the speed of light and $\tau_M$ the maximum laser pulse duration provided.

4. Locating device according to claim 1, characterized in that it uses an optical fiber connection forming a bus line (FB) between said two ends, the probes being angularly distributed and each comprising an optical coupling device for the bidirectional coupling to the optical bus line.

5. Locating device according to claim 4, characterized in that the sum of the lengths of the two conductors (F1, F2) connecting each probe to said detection ends (B1, B2) corresponds to the length (L) of the optical bus line (FB).

6. Locating device according to claim 5, characterized in that the probes (C1 to Cn) are interposed in the bus line (FB) in such a manner that the path length difference ($\Delta Xj$) of the two optical paths from each probe are different and that the smallest difference ($\Delta Lm$) is predetermined to exceed c $\tau_M$, wherein c is the speed of light and $\tau_M$ the maximum laser pulse duration provided.

7. Locating device according to claim 6, characterized in that the optical bus line (FB) is a monofiber and the bidirectional couplers are each composed of a main fiber element (FB12) interposed in the bus line and of two fiber elements (F1j, F2j) for coupling the reception optic (Oj) of the probe to the bus line and through the latter to the ends leading to the detecting means.

8. Locating device according to any of the preceding claims, used to perform an angular coverage of the azimuthal angle $\alpha_s$ characterized in that the probes the number of which is n are regularly distributed across the azimuthal angle forming an angle $\alpha_o = \alpha_s/n$ from one probe to the next, and that the view angles of the reception optics present the same value $\alpha_1$ determined to slightly exceed the value $\alpha_o$ of probe separation to permit an overlapping from one probe to the next.

9. Locating device according to claim 8, characterized in that the processing circuit (2) is determined to obtain the angular location with a half-quantum exactitude, the measurement quantum representing the angular value $\alpha_o$ separating two successive probes.

10. Use of a locating device according to claim 8 or 9, to perform a panoramic azimuthal coverage, wherein the n probes are regularly azimuthally distributed forming an angle $\alpha_o = 2\pi/n$ from one probe to the next.

# FIG_1

# FIG_3

# FIG_2

# FIG_4

$L = 21\,\Delta L$

# FIG_5

FIG_6

0 082 045

FIG_7

FIG_8

7

# FIG_9